# EUROPÄISCHE PATENTSCHRIFT

(11) **EP 1 331 375 B1**
(45) Veröffentlichungstag und Bekanntmachung des Hinweises auf die Patenterteilung: **03.06.2015**
(21) Anmeldenummer: 02027338.9
(22) Anmeldetag: 07.12.2002
(51) Int. Cl.: F02M 35/06, F02M 35/08, F02B 29/04

(54) **Einrichtung zum Abführen von Wasser, Staub und dergleichen**
Device for removing water, dust and the like
Dispositif pour enlever de l'eau, de la poussière et similaires

(30) Priorität: 24.01.2002 DE 10202533
(43) Veröffentlichungstag der Anmeldung: 30.07.2003
(73) Patentinhaber: Dr. Ing. h.c. F. Porsche AG, 70435 Stuttgart (DE)
(72) Erfinder: Schulze, Heinz, 70771 Leinfelden-Echterdingen (DE); Storz, Eberhard, 74366 Kirchheim (DE)

(56) Entgegenhaltungen:
- DE-C1- 4 109 406
- US-A- 1 684 023
- US-A- 1 745 950
- US-A- 4 946 482
- US-B1- 6 295 953

## Beschreibung

Die Erfindung bezieht sich auf eine Einrichtung zum Abführen von Wasser, Staub und dgl. nach dem Oberbegriff des Anspruchs 1.

Aus der DE 41 09 406 C1 ist ein aus einem Trockenluftfilter und einem Staubabscheider bestehende Luftfiltereinrichtung für eine Brennkraftmaschine bekannt, die mit einem Staubabsauggebläse in einer vom Staubabscheider wegführenden Staubabluftleitung versehen ist. In einer Lüfterzarge, welche einströmseitig einen Wärmetauscher umfasst, und ausströmseitig ein Gebläserad aufweist, ist ein sogenanntes Venturirohr vorgesehen, welches über Leitungen mit dem Staubabscheider bzw. dem Ladeluftkühler verbunden ist.

In der US 4946482 ist eine Luftfiltereinrichtung für eine Brennkraftmaschine beschrieben, wobei das Luftfiltergehäuse eine Stauböffnung aufweist, zu der gekühlten Luftkand verbunden ist.

Aufgabe der Erfindung ist es, eine Einrichtung zum Abführen von Wasser, Staub und dgl. aus einem Luftfiltergehäuse in einfacher Weise zu schaffen.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch eine sogenannte Unterdruckleitung zwischen einem Luftfiltergehäuse und einer Lüfterzarge möglicherweise im Luftfiltergehäuse vorhandenes Wasser absaugbar ist. Hierzu ist zwischen dem Luftfiltergehäuse und der Lüfterzarge des Luftgebläserades eine Verbindungsleitung vorgesehen, die einerseits mit einem wasseraufnehmenden Raum des Luftiltergehäuses und andererseits mit einem von der Lüfterzarge umschlossenen Raum verbunden ist. Durch diese Verbindungsleitung zwischen dem wasseraufnehmenden Raum im Luftfiltergehäuse und dem umgebenden Raum in der Lüfterzarge wird durch die Verbindungsleitung eine einfache Möglichkeit geschaffen, Wasser kontinuierlich aus dem Luftfiltergehäuse zu entfernen, damit es nicht in den Luftfilter eintreten kann und mit der Verbrennungsluft mitgerissen wird bzw. gar nicht erst in den Luftfilter eintreten kann.

Damit das Wasser oder auch Staubpartikel bei Betrieb der Brennkraftmaschine aus dem Luftfiltergehäuse abgesogen werden können, wird der herrschende Unterdruck in der Kühlereinheit ausgenutzt. Insbesondere besteht von der Lüfterzarge bis zum Luftfiltergehäuse ein Druckgefälle, derart, daß das Wasser über die Verbindungsleitung in die Lüfterzarge saugbar und nach außen abführbar ist. Das Wasser oder die Schmutzpartikel können somit ohne besondere Hilfsmittel über die Leitung abgesogen werden, so daß der Luftfilter und die Reinluft frei von Wasser ist.

Die Verbindungsleitung ist zumindest mit dem Rohluftgehäuse des Luftfiltergehäuses verbunden und tritt in den von der Lüfterzarge ummantelten Raum ein. Das heißt, die Verbindungsleitung kann bei einem aus einem Rohluftgehäuse und einem Reinluftgehäuse sowie einen zwischen diesen Gehäusen angeordneten Luftfilter mit einem oder mehreren Räumen des Luftfiltergehäuses verbunden sein, so daß bei Wassereintritt, wie es beispielsweise bei Wasserdurchfahrt vom Luftfiltergehäuse aufgenommen werden kann, unmittelbar abführbar ist.

Ein Ausführungsbeispiel der Erfindung ist in den Zeichnungen dargestellt und wird im folgenden näher beschrieben.

Es zeigen
- Fig. 1: eine schematische Darstellung eines Luftfiltergehäuses und einer Kühlereinheit mit Verbindungsleitung und
- Fig. 2: eine schaubildliche Darstellung des Luftfiltergehäuses und der Kühlereinheit mit der als Unterdruckleitung ausgeführten Verbindungsleitung zwischen dem Luftfiltergehäuse und der Kühlereinheit

Im Fahrzeug ist bugseitig eine Kühlereinheit 1 für eine Brennkraftmaschine angeordnet, die einen Wärmetauscher 2 mit einem in einer Lüfterzarge 3 angeordneten Lüfterrad 4 umfaßt. Ebenfalls bugseitig des Fahrzeugs ist ein Gehäuse 5 für einen Luftfilter 6 vorgesehen, der zwischen einem Rohluftgehäuse 7 und einem Reinluftgehäuse 8 des Luftfiltergehäuses 5 gehalten ist. Über dieses Reinluftgehäuse 8 wird durch das Rohluftgehäuse 7 angesaugte Luft 9 nach Durchdringung des Luftfilters 6 der Brennkraftmaschine als Verbrennungsluft 10 zugeführt.

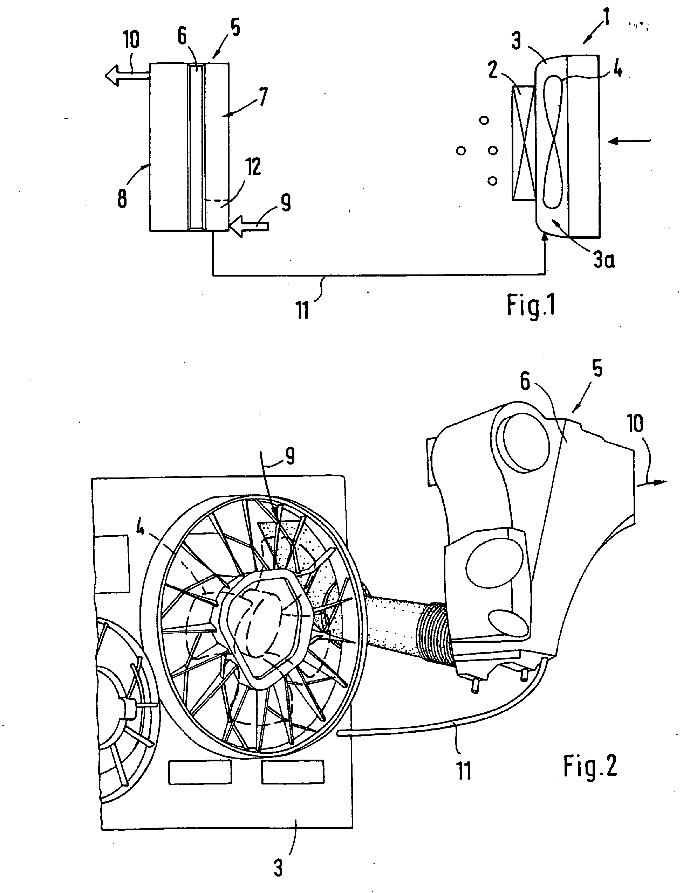

Wie in Fig. 1 näher ausgeführt, ist zwischen dem Luftfiltergehäuse 5 und der Kühlereinheit 1 eine Verbindungsleitung 11 vorgesehen. Insbesondere ist diese Leitung 11 unmittelbar mit dem Rohluftgehäuse 7 verbunden und mündet in einen von der Lüfterzarge 3 umschlossenen Raum 3a zwischen dem Kühler 2 und dem Lüfter 4 ein.

Da in diesem Zwischenraum bei Betrieb der Brennkraftmaschine ein Unterdruck, beispielsweise von 0,25 bar herrscht, kann sich im Rohluftgehäuse 7 ansammelndes Wasser 12 über die Leitung 11 abgesogen und nach außen abgeführt werden. Ebenso kann auch Staub und dgl. Verunreinigungen nach außen entfernt werden.

Ein Wassereintritt in das Luftfiltergehäuse 5 ist insbesondere möglich bei Wasserdurchfahrt oder bei starkem Regen. Da bei laufendem Motor im Luftfiltergehäuse 5 ein Unterdruck herrscht, kann das Wasser nicht ohne weiteres ablaufen. Aufgrund eines herrschendes Druckgefälles von der Lüfterzarge 3 zum Luftfiltergehäuse 5 kann das Wasser oder Staub und dgl. zwischen Kühler und Lüfter befördert werden, von wo aus das Wasser oder der Staub durch die herrschende Luftströmung in den Motorenraum und dann nach außen befördert wird. Hierdurch wird ein wasserfreier Luftfilter erzielt und es kann kein Wassereintritt durch Wasserablaufbohrungen erfolgen.

## Patentansprüche

1. Einrichtung zum Abführen von Wasser, Staub und dgl. aus einem Luftfiltergehäuse (5) einer Brennkraftmaschine eines Kraftfahrzeugs, die eine Kühlereinheit(1) mit einem Lüfterrad (4) und einen Wärmetauscher (2) umfasst und das Luftfiltergehäuse (5) zwischen einem Rohluftgehäuse (7) und einen Reinluftgehäuse (8) einen Luftfilter (6) aufweist,
**dadurch gekennzeichnet, dass**
- zwischen dem Luftfiltergehäuse (5) und einer Lüfterzarge (3) des Lüfterrades (4) eine Verbindungsleitung (11) vorgesehen ist, die einerseits mit einem wasseraufnehmenden Raum des Rohluftgehäuses (7) im Luftfiltergehäuse (5) und andererseits mit einem von der Lüfterzarge (3) umschlossenen Raum (3a) verbunden ist, wobei
- von der Lüfterzarge (3) zum Luftfiltergehäuse (5) Druckgefälle besteht, derart, dass das im Luftfiltergehäuse (5) angesammelte Wasser (12) über die Verbindungsleitung (11) in die Lüfterzarge (3) saugbar und nach außen abführbar ist.

2. Einrichtung nach Anspruch 1, **dadurch gekennzeichnet, dass** in den Zwischenraum zwischen dem Wärmetauscher (2) und dem Lüftergebläserad (4) Wasser oder Staub nach außen über einen Motorenraum abführbar ist.

## Claims

1. Device for discharging water, dust and the like out of an air filter housing (5) of an internal combustion engine of a motor vehicle which comprises a cooler unit (1) with a fan impeller (4) and a heat exchanger (2), and the air filter housing (5) has an air filter (6) between an untreated-air housing (7) and a clean-air housing (8),
**characterized in that**
- a connecting line (11) is provided between the air filter housing (5) and a fan shroud (3) of the fan impeller (4), which connecting line is connected at one side to a water-collecting space in the untreated-air housing (7) in the air filter housing (5) and at the other side to a space (3a) which is enclosed by the fan shroud (3), wherein
- there is a pressure gradient from the fan shroud (3) to the air filter housing (5), such that the water (12) that has collected in the air filter housing (5) can be drawn into the fan shroud (3) via the connecting line (11) and discharged to the outside.

2. Device according to Claim 1, **characterized in that**, in the intermediate space between the heat exchanger (2) and the fan blower wheel (4), water or dust can be discharged to the outside via an engine bay.

## Revendications

1. Dispositif pour évacuer de l'eau, de la poussière et similaires hors d'un boîtier de filtre à air (5) d'un moteur à combustion interne d'un véhicule automobile, lequel comporte une unité de radiateur (1) comprenant une roue de ventilateur (4) et un échangeur de chaleur (2), et le boîtier de filtre à air (5) comprenant un filtre à air (6) entre un boîtier d'air brut (7) et un boîtier d'air propre (8).
**caractérisé en ce que**
- une conduite de liaison (11) est prévue entre le boîtier de filtre à air (5) et un châssis de ventilateur (3) de la roue de ventilateur (4), laquelle conduite de liaison est reliée, d'une part, à un espace de réception d'eau du boîtier d'air brut (7) dans le boîtier de filtre à air (5) et, d'autre part, à un espace (3a) entouré par le châssis de ventilateur (3),
- une chute de pression existant à partir du châssis de ventilateur (3) jusqu'au boîtier de filtre à air (5), de telle sorte que l'eau (12) collectée dans le boîtier de filtre à air (5) puisse être aspirée dans le châssis de ventilateur (3) par le biais de la conduite de liaison (11) et puisse être évacuée vers l'extérieur.

2. Dispositif selon la revendication 1, **caractérisé en ce que**, dans l'espace intermédiaire entre l'échangeur de chaleur (2) et la roue de soufflante de ventilateur (4), de l'eau ou de la poussière peut être évacuée vers l'extérieur par le biais d'un compartiment de moteur.
